# EUROPEAN PATENT SPECIFICATION

(11) **EP 0 545 696 B1**
(45) Date of publication and mention of the grant of the patent: **16.07.1997**
(21) Application number: 92311018.3
(22) Date of filing: 03.12.1992
(51) Int. Cl.: F16L 58/18

(54) **Encasing pipe joints**
Ummantelung von Rohrverbindungen
Gainage de raccords de tuyaux

(30) Priority: 04.12.1991 GB 9125811; 28.08.1992 GB 9218327
(43) Date of publication of application: 09.06.1993
(73) Proprietor: BPB Plc, Slough SL3 6DU (GB)
(72) Inventor: Marchant, William Michael, Carshalton, Surrey SM5 2EN (GB); Game, Robert Charles, South Woodham Ferrers, Essex CM3 5YH (GB)
(74) Representative: Ford, Michael Frederick

(56) References cited:
- EP-A- 0 079 610
- GB-A- 1 031 161
- GB-A- 1 386 635
- GB-A- 2 059 873
- US-A- 2 794 483
- US-A- 3 480 493
- US-A- 3 989 281
- US-A- 4 776 613

## Description

This invention relates to the joining of lengths of pipe to form a pipeline, and to a material to be used in doing so.

The pipes for gas and oil pipe lines, especially undersea pipelines, are typically made in lengths of about 12 metres, and are coated with concrete for protection. The concrete layer is typically of the order of 10cm thick. An end portion of each length projects from the concrete. Where the sections of pipe are welded together they have to be protected by bridging the gap between the concrete collars, which may be of the order of 80cm wide.

One method currently in use for protecting the join is to apply tape around the exposed pipe and then to form a mould around the join, extending across the gap from the concrete at either side of the join. This mould is formed by strapping a sheet of mild steel around the join. A door is cut into an upper part of the steel mould. A molten marine mastic which is a bituminous composition, heated to a temperature of about 180°C, is poured into the mould to fill the gap between the two concrete sections at either side of the join. The sheet steel mould is left in place on the pipeline. In addition to the obvious expense involved in the manufacture of these moulds from sheet steel, there is a problem that part of the sheet steel can eventually separate away from the joint it is protecting, with potential damage to the environment. In particular, steel moulds that have broken away from a joint are capable of causing considerable damage to fishing nets.

Another proposed method for protecting the join uses a fast-setting concrete in place of the marine mastic. Again steel sheet is used to form the mould. Vibrators are placed against the exterior of the mould and are operated as the concrete is poured into it so as to ensure that the concrete completely fills the mould.

It has been proposed to remove the sheet steel mould when the concrete has set, but this can delay the overall process of joining pipe lengths.

GB 1448823 published in 1976 proposed a system in which a two piece mould formed from a polymer foam is assembled around a joint, after which the mould is filled with a mixture of a mineral filler and non-aqueous polymerisable organic chemicals. This system has not come into general use and subsequent work on systems using non-aqueous polymerisable chemicals has used removable, reusable, moulds.

The use of sheet steel to form disposable moulds has continued, despite the recognition of an attendant environmental problem.

Consequently, the invention provides a method of encasing a joint between end portions of two lengths of pipe, which end portions project from a coating which surrounds another portion of each length of pipe, the method comprising enclosing the joined end portions within a mould, and then introducing a settable, pourable composition into the mould and allowing it to set therein, where the mould is fibreboard sheet while any covering layer at a surface thereof is of a weight per unit area which is not greater than the weight per unit area of the remainder of the fibreboard sheet.

Although not necessarily limited to such applications, the invention is particularly applicable to the encasing of pipe joints at sea when building a pipeline which is then laid on the sea bed.

The pipe sections at either side of the joint will usually have a protective outer coating, normally of concrete, with end portions of the pipe sections projecting from this coating at the join, and the mould can be formed by wrapping the sheet fibreboard around the joint and securing it to the pipe sections' protective outer coating at either side of the joint.

Stated in another way, this invention provides the use of fibreboard sheet to form a mould enclosing a pipe joint, for encasing the pipe joint with a settable, pourable composition.

So-called solid fibreboard is customarily formed by making a plurality of layers by a wet-laid process and laminating these together to form a board which, normally, is porous. This may be lined on each surface with a layer of kraft paper. Sometimes this paper is overlaid with a layer of polyethylene sheet to give a high degree of resistance to damage from water. The resulting material is suitable for making boxes to carry fish or farm produce which is apt to be wet.

The term "solid" when applied to fibreboard denotes the absence of voids such as occur in corrugated board.

Fibreboard for use in this invention may be made up from a plurality of layers made by a wet-laid process, in just the same way, using the same machinery.

The pipe which is joined will generally have an internal diameter in excess of 300 mm, e.g. an internal diameter in a range from 400 to 1500 mm or more. The fibreboard will need to have sufficient strength and stiffness to support the contents of the mould as it sets. For this reason the overall thickness of the fibreboard preferably lies in a range from 1.5 to 3.5 mm, and its ratio of overall weight to area, usually referred to as "weight" is preferably at least 700g/m². Suitably it lies in a range from 700 to 2500 g/m². The weight of the laminate before lining will generally lie in a range from 500 to 2000 g/m².

The settable material which is poured into the mould to encase the pipe joint may be hot marine mastic or an aqueous cementitious mixture such as rapid setting concrete. It is also within the scope of the invention for some other pourable, settable substance to be used, e.g. a mixture based on non-aqueous polymerisable chemicals.

The fibreboard may require different properties according to the nature of the settable material.

If the settable material is an aqueous cementitious material such as rapid setting concrete the fibreboard should resist water penetration for at least a limited time while the material sets. In these circumstances both faces of the board are preferably lined (i.e. laminated at the surface) with a paper layer to protect the board interior and strengthen the board. The paper layer may have a weight in the range 50 to 500 g/m². A water resistant paper liner, such as wet strength kraft paper, may well be sufficient to give adequate water resistance. However, if desired the board may have a polyethylene layer on either or both faces of the board, preferably over a paper liner. A polyethylene layer will generally have a weight in the range 10 to 40 g/m².

If the settable composition is a bituminous marine mastic, the requirements imposed on the fibreboard are somewhat different. Such mastic is poured in at a temperature well above the boiling point of water. Fibreboard contains some water - normally about 8 to 10% by weight. We have found in these circumstances that it is very important that the material of the board, and one surface of it, shall be vapour permeable to allow the escape of water vapour evaporating from the board. If this permeability is absent, pockets of vapour can form, forcing layers of the fibreboard apart, and seriously weakening the mould.

In these circumstances it is preferred that the interior of the fibreboard sheet and its surface at the exterior of the mould are both vapour permeable.

It is also very strongly preferred that there is a vapour barrier at the surface of the board which forms the interior of the mould. Such a vapour barrier serves to prevent escape of volatile material from the hot compositions poured into the mould and also prevents the molten composition from penetrating into the fibreboard itself.

This vapour barrier should be able to retain its integrity when exposed to the hot composition. The conventional temperature at which this is poured is 180°C, but preferably the vapour barrier can resist temperature up to 245°C.

A material which may be used to form the vapour barrier is polyester, in the form of a layer on or adjacent the fibreboard surface which faces the mould interior. This film may be carried on a paper lining, for example a film with a weight of up to 100 g/m² carried on paper of weight 100 to 200 g/m².

The opposite face of the fibreboard is preferably lined with a paper layer, suitably a kraft paper, to protect the board interior and strengthen the board. This paper is preferably heavier, e.g. over 250 g/m², such as 350 to 500 g/m².

It is customary to drench a steel mould with water after filling, in order to hasten the setting of the marine mastic composition. A polyethylene overlayer would protect the fibreboard during such drenching, but would also provide a barrier against the egress of water vapour. We therefore prefer to use a strong, water resistant liner, such as wet strength kraft paper, on this surface of the board, without a polyethylene overlayer.

Thus, the sheet fibreboard may have a vapour barrier at one surface thereof, while the interior of the board and the opposite surface are vapour permeable.

An embodiment of this invention will now be described with reference to the accompany drawings, in which:

Fig. 1 is a diagrammatic cross section through a solid fibreboard sheet.

Fig. 2 is a side view of a mould formed around a pipe joint and Fig. 3 is a cross section through the joint and mould on the line III-III of Fig. 2.

Fig. 4 is a diagrammatical cross section through an alternative form of solid fibreboard sheet.

Fig. 5 is a cross section through the joint and mould at its mid point showing the fibreboard sheet of Fig. 4 in use as a mould.

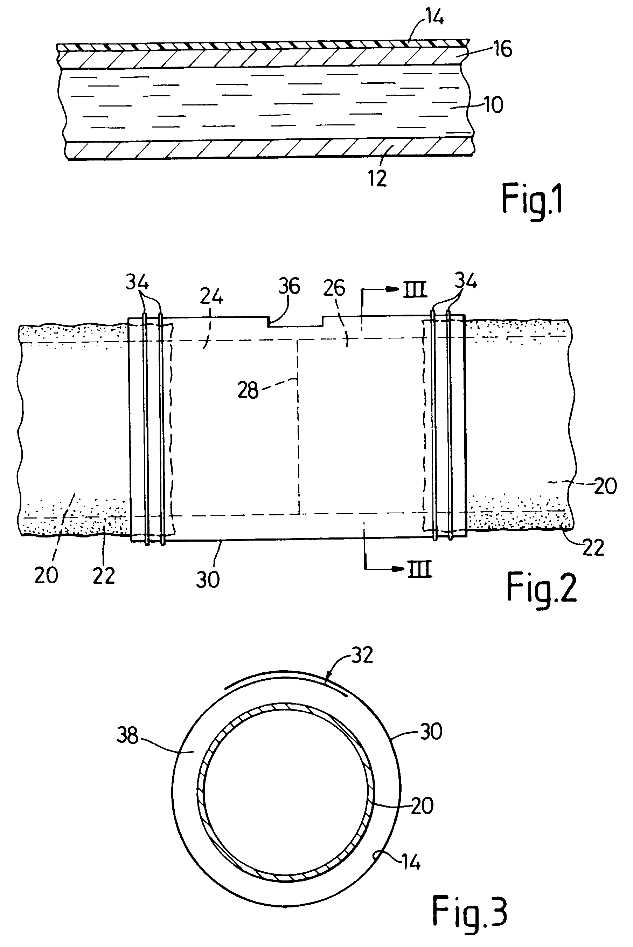

Reference is first made to Fig. 1. This figure shows the various layers in a fibreboard sheet for use with bituminous mastic. The figure is diagrammatic in that the thickness of the individual layers are not shown in proper proportion to each other.

The main body 10 of the board is formed by multiple plies of fibreboard prepared and laminated together on conventional board making machinery. These plies have a total weight of approximately 1000 g/m². At one surface the board is lined with a water resistant paper liner 12 (in this instance wet strength kraft paper) having a weight of approximately 400 g/m². At the opposite surface the board is lined with a composite liner consisting of a polyester film 14 of weight 35 g/m² previously laminated onto a kraft paper 16 having a weight of 150 g/m². Polyester coated kraft paper of this type is commercially available through Donaldsons Paper Sales Ltd under the trade name Paratherm. Lamination of the layers 12 and 16 to the core 10 of the board can be carried out using conventional laminating machinery such as used when manufacturing fibreboard to be used for other purposes. When carrying out the lamination an adhesive based on polyvinyl alcohol is applied to glue the layers 12,16 to the core formed by the plies 10. This adhesive does not form a continuous film and does not form a vapour barrier.

The coating of polyester 14 constitutes a vapour barrier preventing vapour from passing through this barrier into the interior of the board. It would also prevent any vapour within the board from escaping through the layer 14.

By contrast the plies 10 and the kraft liner 12 are vapour permeable so that any vapour which forms within the board can migrate out through the liner 12.

Figs. 2 and 3 show the encasing of a pipe joint. Pipe sections 20 are encased in a protective outer coating of concrete 22. End portions 24,26 of the pipe sections project from the concrete and are welded together at 28. Subsequently to this the projecting end portions 24,26 are wrapped with a protective tape (not shown) of the type conventionally used with a steel mould. A sheet 30 of fibreboard of the type described with reference to Fig. 1 is wrapped around the joint with the polyester vapour barrier 14 on the inside. The sheet is overlapped on itself at the top as shown at 32 in Fig. 3 and held in place by steel or plastic strapping 34 holding it to the margins of the concrete 22.

After the fibreboard sheet has been secured around the joint a hole 36 is cut in to it at the top. This can be done by hand with a sharp knife. Alternatively, the fibreboard sheet could be cut and creased using machinery before being wrapped around the joint. Hot bituminous mastic is then poured in through this hole to fill the void 38 around the pipe joint. This is poured in at a temperature of about 180°C.

The polyester coating 14 is able to retain its integrity as a vapour barrier up to this temperature and indeed to somewhat above, preferably up to 245°C. Consequently it prevents volatile organic vapour contained in the bituminous mastic from escaping through the fibreboard. It also functions as a liquid barrier and prevents the mastic from penetrating into the fibreboard. However the heat of the mastic causes water vapour in the fibreboard to evaporate and this is able to escape by passing through the porous plies 10 and the outer liner 12. Because it is able to escape it does not cause any separation between the plies 10.

Once the bituminous mastic has been poured in, the exterior surface of the fibreboard is drenched with water to cool the mastic. After the mastic has cooled sufficiently to set to a substantially rigid condition the fibreboard 30 might be removed by cutting the strapping 34 and discarded. Alternatively, and more conveniently, it may simply be left in place around the pipe joint, and the pipeline which includes the joint laid in place with the fibreboard still attached.

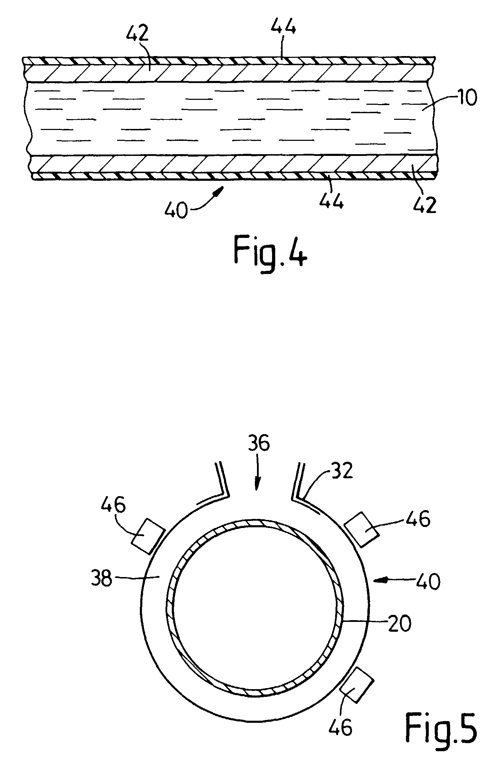

Fig. 4 shows a fibreboard sheet 40 for use with a rapid setting concrete. Again the figure is diagrammatic in that the thickness of the individual layers are not shown in proper proportion to each other.

The main body 10 of the board is formed by multiple plies of fibreboard prepared and laminated together on conventional board making machinery. These plies have a total weight of approximately 1000 g/m². At each surface the board is lined with a kraft paper liner 42 having a weight of approximately 50 g/m². Over this may be applied, as is here shown, a layer 44 of polyethylene of weight 12 g/m². Lamination of the paper layers 42 to the core 10 of the board can be carried out using conventional machinery for fibreboard manufacture. An adhesive based on polyvinyl alcohol is used to bond the paper liners 42 to the core 10. If polyethylene layers 44 are applied to the kraft liners 42 they are formed by extrusion directly onto the kraft paper before it is laminated to the main body 10 of the board.

For use, a sheet of this fibreboard is wrapped around a pipe joint exactly as shown by Figs. 2 and 3. A hole 36 is cut at the top - this may be a little larger than shown in Fig. 2. Again it may be pre-formed by cutting and creasing the board before it is wrapped around the pipe joint.

Vibrators 46 are applied to the exterior of the fibreboard sheet as shown in Fig. 5, then while these are in operation a rapid setting concrete is mixed and immediately poured in through the hole 36 to fill the void 38.

Shortly after filling the mould, the vibrators 46 are removed and the concrete is left to set. Then the fibreboard mould may be removed but more preferably is left in place around the joint when the pipeline is laid.

## Claims

1. A method of encasing a joint between end portions (24,26) of two lengths of pipe (20), which end portions project from a coating (22) which surrounds another portion of each length of pipe, the method comprising
(i) enclosing the joined end portions (24,26) within a mould which is formed from fibreboard sheet (30), where any covering layer (12,14,16,42,44) at a surface thereof is of a weight per unit area which is not greater than the weight per unit area of the remainder of the fibreboard sheet, and then
(ii) introducing a settable, pourable composition into the mould and allowing it to set therein.

2. A method according to claim 1, wherein any covering layer has a weight per unit area which does not exceed 500 g/m² while the part of the fibreboard sheet between any covering layers has a weight of at least 500 g/m².

3. A method according to claim 1 or claim 2, wherein the fibreboard sheet, including any covering layers on the surface thereof has an overall weight of at least 700 g/m².

4. A method according to claim 3, wherein the fibreboard sheet is lined with a paper layer (12,16,42) on both surfaces.

5. A method according to any one of the preceding claims, wherein the fibreboard sheet (30) is lined on one or both surfaces with a paper layer (42) and a polyethylene layer over the paper layer, and wherein the settable composition is an aqueous cementitious composition.

6. A method according to any one of the preceding claims, wherein the fibreboard sheet has a vapour barrier (14) at its surface facing into the mould, the interior (10) of the sheet and its opposite surface (12) being vapour permeable.

7. A method according to claim 6, wherein the vapour barrier (14) is a layer of an organic polymer which retains its integrity as a barrier up to at least 180°C.

8. A method according to claim 6 or claim 7, wherein the fibreboard sheet has an overall weight in excess of 1000 g/m², the vapour barrier is a polyester film of weight below 100 g/m², and the fibreboard sheet has a layer of kraft paper, with a weight in excess of 250 g/m², at the surface opposite to the vapour barrier.

9. A method according to any one of claims 1 to 4 or 6 to 8, wherein the settable composition is a bituminous composition poured into the mould at a temperature above 100°C.

10. A method according to any one of the preceding claims, wherein the pipe joint is a part of a pipeline and the pipeline is laid with the mould still in place around the joint.

## Patentansprüche

1. Verfahren zum Ummanteln einer Verbindung zwischen Endabschnitten (24, 26) zweier Rohrlängen (20), wobei die Endabschnitte aus einer Beschichtung (22) herausragen, die einen weiteren Abschnitt jeder Rohrlänge umgibt, und wobei das Verfahren folgende Schritte umfasst:
(i) Einschließen der verbundenen Endabschnitte (24, 26) in einer Form, die aus einer Hartpappeplatte (30) gebildet wird, bei der jede Deckschicht (12, 14, 16, 42, 44) an einer Oberfläche davon ein Gewicht pro Flächeneinheit aufweist, das nicht größer als das Gewicht pro Flächeneinheit der übrigen Hartpappeplatte ist; und anschließendes
(ii) Einbringen einer härtbaren, gießbaren Zusammensetzung in die Form und Härtenlassen derselben darin.

2. Verfahren nach Anspruch 1, worin jede Deckschicht ein Gewicht pro Flächeneinheit besitzt, das 500 g/m² nicht übersteigt, während der Abschnitt der Hartpappeplatte zwischen jeder Deckschicht ein Gewicht von zumindest 500 g/m² aufweist.

3. Verfahren nach Anspruch 1 oder 2, worin die Hartpappeplatte einschließlich aller Deckschichten an ihrer Oberfläche ein Gesamtgewicht von zumindest 700 g/m² aufweist.

4. Verfahren nach Anspruch 3, worin die Hartpappeplatte an beiden Oberflächen mit einer Papierschicht (12, 16, 42) kaschiert ist.

5. Verfahren nach einem der vorangegangenen Ansprüche, worin die Hartpappeplatte (30) an einer oder beiden Oberflächen mit einer Papierschicht (42) und einer Polyethylenschicht über der Papierschicht kaschiert ist und worin die härtbare Zusammensetzung eine wässrige Zusammensetzung auf Zementbasis ist.

6. Verfahren nach einem der vorangegangenen Ansprüche, worin die Hartpappeplatte eine Dampfsperrschicht (14) auf ihrer der Form zugewandten Oberfläche aufweist, während das Innere (10) der Platte und ihre gegenüberliegende Oberfläche (12) dampfdurchlässig sind.

7. Verfahren nach Anspruch 6, worin die Dampfsperrschicht (14) eine Schicht aus einem organischen Polymer ist, die ihre Integrität als Sperrschicht bis hinauf zu zumindest 180°C beibehält.

8. Verfahren nach Anspruch 6 oder 7, worin die Hartpappeplatte ein Gesamtgewicht von über 1.000 g/m² aufweist, die Dampfsperrschicht ein Polyesterfilm mit einem Gewicht von unter 100 g/m² ist und die Hartpappeplatte an der Oberfläche gegenüber der Dampfsperrschicht eine Schicht aus Kraftpapier mit einem Gewicht von über 250 g/m² aufweist.

9. Verfahren nach einem der Ansprüche 1 bis 4 oder 6 bis 8, worin die härtbare Zusammensetzung eine Zusammensetzung auf Bitumenbasis ist, die bei einer Temperatur von über 100°C in die Form gegossen wird.

10. Verfahren nach einem der vorangegangenen Ansprüche, worin die Rohrverbindung ein Teil einer Pipeline ist und die Pipeline mit noch um die Verbindung herum befindlicher Form verlegt wird.

## Revendications

1. Procédé pour le gainage d'un raccord entre des parties d'extrémité (24, 26) de deux longueurs de tuyau (20), ces parties d'extrémité faisant saillie d'un revêtement (22) qui entoure une autre partie de chaque longueur de tuyau, le procédé comprenant les étapes consistant à
(i) enfermer les parties d'extrémité raccordées (24, 26) dans un moule qui est réalisé en une feuille de carton dur (30), où toute couche de recouvrement (12, 14, 16, 42, 44) à la surface de celui-ci a un poids par unité de surface qui n'est pas supérieur au poids par unité de surface du restant de la feuille en carton dur, et ensuite
(ii) introduire une composition durcissable, apte à être versée, dans le moule et le laisser durcir.

2. Procédé selon la revendication 1, où toute couche de recouvrement a un poids par unité de surface qui ne dépasse pas 500 g/m² tandis que la partie de la feuille en carton dur entre n'importe quelles couches de recouvrement a un poids d'au moins 500 g/m².

3. Procédé selon la revendication 1 ou la revendication 2, où la feuille en carton dur, incluant n'importe quelle couche de recouvrement sur sa surface a un poids total d'au moins 700 g/m².

4. Procédé selon la revendication 3, où la feuille en carton dur est revêtue d'une couche en papier (12, 16, 42) sur les deux surfaces.

5. Procédé selon l'une des revendications précédentes, où la feuille en carton dur (30) est revêtue sur une ou les deux surfaces d'une couche en papier (42) et d'une couche en polyéthylène sur la couche de papier, et où la composition durcissable est une composition aqueuse à base de ciment.

6. Procédé selon l'une des revendications précédentes, où la feuille en carton dur a une barrière de vapeur (14) à sa surface orientée vers le moule, l'intérieur (10) de la feuille et sa surface opposée (12) étant perméables à la vapeur.

7. Procédé selon la revendication 6, où la barrière de vapeur (14) est une couche en un polymère organique qui garde son intégrité comme barrière jusqu'à au moins 180°C.

8. Procédé selon la revendication 6 ou la revendication 7, où la feuille en carton dur a un poids total supérieur à 1000 g/m², la barrière de vapeur est un film en polyester d'un poids inférieur à 100 g/m², et la feuille en carton dur a une couche de papier Kraft, avec un poids supérieur à 250 g/m², à la surface opposée à la barrière de vapeur.

9. Procédé selon l'une des revendications 1 à 4 ou 6 à 8, où la composition durcissable est une composition bitumeuse versée dans le moule à une température supérieure à 100°C.

10. Procédé selon l'une des revendications précédentes, où le raccord de tuyau fait partie d'une canalisation, et la canalisation est déposée avec le moule toujours en pace autour du raccord.
